# EUROPEAN PATENT APPLICATION

(11) **EP 4 141 531 A1**
(43) Date of publication of application: **01.03.2023**
(21) Application number: 22189180.7
(22) Date of filing: 08.08.2022
(51) Int. Cl.: G02F 1/365

(54) **IMPROVED BROADBAND RADIATION GENERATION IN PHOTONIC CRYSTAL OR HIGHLY NON-LINEAR FIBRES**

(30) Priority: 25.08.2021 US 202163236954 P; 05.10.2021 EP 21201043
(71) Applicant: ASML Netherlands B.V., 5500 AH Veldhoven (NL); ASML Holding N.V., 5500 AH Veldhoven (NL)
(72) Inventor: AJGAONKAR, Mahesh, Upendra, Wilton, 06897 (US); ABDOLVAND, Amir, 5500 AH Veldhoven (NL); PONGERS, Willem, Richard, 5500 AH Veldhoven (NL); BASELMANS, Johannes, Jacobus, Matheus, 5500 AH Veldhoven (NL); NI, Yongfeng, 5500 AH Veldhoven (NL)
(74) Representative: ASML Netherlands B.V.

(57) **Abstract**

Radiation source assembly and method for generating broadband radiation by spectral broadening. The radiation source assembly comprises a pump assembly configured to provide broadband input radiation. The pump assembly comprises a pump source configured to provide first radiation at a pump wavelength, and a broadband assembly configured to provide second radiation comprising a continuous wavelength range, wherein the first radiation and the second radiation form the broadband input radiation. The radiation source assembly further comprises an optical fibre configured to receive the broadband input radiation. The optical fibre comprises a core configured along at least a part of the length of the fibre to guide the received broadband input radiation during propagation through the fibre, so as to generate broadband radiation by spectral broadening to be output by the fibre.

## Description

### FIELD

The present invention relates to radiation source assemblies and methods for generating broadband radiation by spectral broadening. Specifically, the assemblies, systems, and methods use pump radiation and broadband input radiation comprising a continuous wavelength range, both propagating along a fibre in order to generate broadband output radiation.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-k₁ lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and k₁ is an empirical resolution factor. In general, the smaller k₁ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Lithography may be used to create structures on substrates, sometimes referred to as lithographically patterned structures. These structures may be measured and/or inspected at several stages during and/or after the fabrication process. The measurements may be performed using radiation, such as electromagnetic radiation. Measurements may be performed using broadband radiation. These may be provided by a radiation source, which may be included in or connected to a metrology apparatus.

Some broadband radiation sources generate broadband radiation through spectral broadening of input radiation using non-linear optical effects. The input radiation, which may also be referred to as pump radiation, may have high peak powers in order to stimulate the non-linear effects. This high power may have disadvantages of causing heating and ionization of the materials in the system where spectral broadening takes place. This may cause damage and decrease the lifetime of the radiation source. Described herein are assemblies and methods for generating broadband radiation that address some of the challenges associated with high peak power radiation.

### SUMMARY

According to an aspect of the disclosure, there is provided a radiation source assembly for generating broadband radiation by spectral broadening. The radiation source assembly comprises a pump assembly configured to provide broadband input radiation. The pump assembly comprises a pump source configured to provide first radiation at a pump wavelength, and a broadband assembly configured to provide second radiation comprising a continuous wavelength range. The first radiation and the second radiation form the broadband input radiation. The radiation source assembly further comprises an optical fibre configured to receive the broadband input radiation. The fibre comprises a core configured along at least a part of the length of the fibre to guide the received broadband input radiation during propagation through the fibre, so as to generate broadband radiation by spectral broadening to be output by the fibre. The optical fibre may be a non-linear fibre.

Optionally, the broadband assembly may comprise an optical feedback loop configured to feed back a portion of the output radiation of the source assembly to provide the second radiation.

Optionally, the broadband assembly may comprise a polarization filter configured to set a polarization of the second radiation such that at least a portion of the polarization of the second radiation matches a polarization of the first radiation.

Optionally, the optical feedback loop may comprise a filter configured to select a subrange of the wavelength range of the broadband radiation output by the fibre.

Optionally, the input radiation and the broadband radiation may be pulsed radiation. The optical feedback loop may be configured such that the portion of output radiation pulse spatially and temporally overlaps with at least a portion of the first radiation pulse inside the fibre core.

Optionally, the optical fibre may be a hollow core fibre.

Optionally, the optical fibre may be a photonic crystal fibre.

Optionally, the photonic crystal fibre may comprise a single ring of microstructures surrounding the hollow core of the optical fibre.

Optionally, the single ring structure may comprise a plurality of capillaries surrounding the hollow core.

Optionally, the hollow core may have a diameter in a range from 20 µ m to 50 µm, for example a diameter of 30 µm.

Optionally, the broadband radiation may comprise supercontinuum radiation.

Optionally, the broadband radiation may comprise radiation with wavelengths in a range from 400 nm - 2200 nm.

Optionally, the core of the fibre may be configured to comprise a nonlinear medium fluid for stimulating spectral broadening.

Optionally, the radiation source assembly may further comprise a reservoir for containing the nonlinear medium fluid. The reservoir and the optical fibre may be configured to provide the nonlinear medium fluid to the hollow core of the optical fibre.

Optionally, the fluid may comprise a gas mixture comprising a noble gas.

Optionally, the fluid may comprise a gas mixture comprising a molecular gas.

Optionally, the length of the fibre may be in a range from 5 cm to 40 cm.

Optionaly, the first radiation may have a pulse energy in a range from 1 µJ - 10 µJ, or 2.5 µJ - 4.0 µJ.

Optionally, the second radiation may have an intensity not exceeding 1%, 2%,5%, 10% or 15% of the intensity of the first radiation radiation.

According to another aspect of the disclosure, there is provided a method for generating broadband radiation by spectral broadening. The method comprises providing, by a pump assembly, broadband input radiation. Providing broadband input radiation comprises providing, by a pump source, first radiation at a pump wavelength, and providing, by a broadband assembly, second radiation comprising a continuous wavelength range. The first radiation and the second radiation form the broadband input radiation. The method further comprises receiving, in an optical fibre (which may be a nonlinear fibre), the broadband input radiation. The method further comprises generating broadband radiation by spectral broadening by guiding, in a core of the fibre along at least a part of the length of the fibre, the received broadband input radiation during propagation through the fibre, and providing the generated broadband radiation as output of the fibre. The method may further comprise and/or involve any of the features described in relation to the radiation source assembly above.

According to another aspect of the disclosure, there is provided a metrology tool for determining a characteristic of interest of a structure on a substrate comprising a radiation source assembly as described above.

According to another aspect of the disclosure there is provided an inspection tool for inspecting a structure on a substrate comprising a radiation source assembly as described above.

According to another aspect of the disclosure there is provided a lithographic apparatus comprising a radiation source assembly as described above.

According to another aspect of the disclosure there is provided a litho cell comprising an apparatus or tool as described above.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic representation of a scatterometer;
- Figure 5 depicts a schematic representation of a level sensor;
- Figure 6 depicts a schematic representation of an alignment sensor;
- Figure 7 depicts a schematic representation of a radiation source assembly for generating output broadband radiation by spectral broadening;
- Figures 8(a) and 8(b) depicts example graphs representing energy spectral density as a function of wavelength and propagation distance along a fibre;
- Figure 9 depicts a schematic representation of a radiation source assembly for generating broadband output radiation by spectral broadening;
- Figures 10(a) and 10(b) depict example graphs of energy spectral density as a function of wavelength and propagation distance along a fibre for two different broadband input radiation ranges;
- Figures 11(a) and 11(b) depict graphs showing power spectral density values of broadband output radiation of broadband radiation assemblies for different percentages of feedback intensity;
- Figures 12(a) and 12(b) depict graphs showing power spectral density values of broadband output radiation for different peak pulse intensities of the input radiation;
- Figure 13 is a schematic cross sectional view of a hollow core optical fiber that may form part of a radiation source according to an embodiment in a transverse plane (i.e. perpendicular to an axis of the optical fiber);
- Figure 14 depicts a schematic representation of a radiation source according to an embodiment for providing broadband output radiation; and
- Figures 15 (a) and (b) schematically depict the transverse cross-sections of examples of hollow core photonic crystal fiber (HC-PCF) designs for supercontinuum generation.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

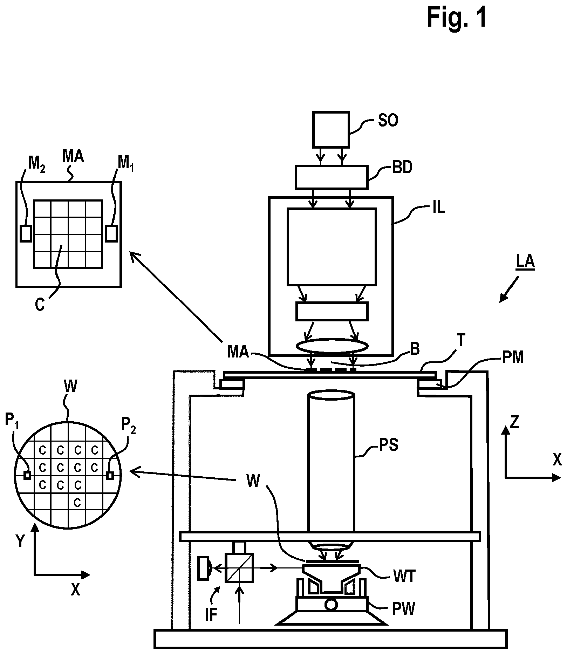

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) T constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support T, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

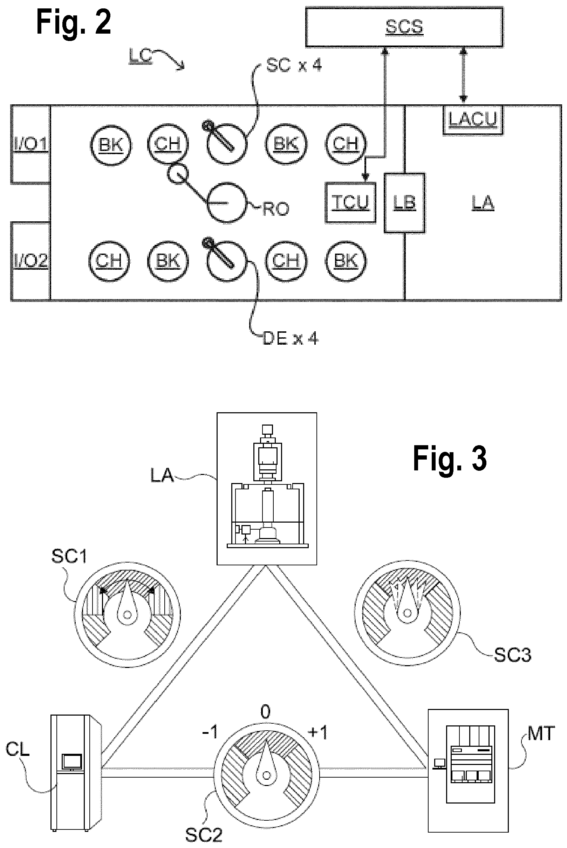

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Figure 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is a ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

Examples of known scatterometers often rely on provision of dedicated metrology targets, such as underfilled targets (a target, in the form of a simple grating or overlapping gratings in different layers, that is large enough that a measurement beam generates a spot that is smaller than the grating) or overfilled targets (whereby the illumination spot partially or completely contains the target). Further, the use of metrology tools, for example an angular resolved scatterometter illuminating an underfilled target, such as a grating, allows the use of so-called reconstruction methods where the properties of the grating can be calculated by simulating interaction of scattered radiation with a mathematical model of the target structure and comparing the simulation results with those of a measurement. Parameters of the model are adjusted until the simulated interaction produces a diffraction pattern similar to that observed from the real target.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation, which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

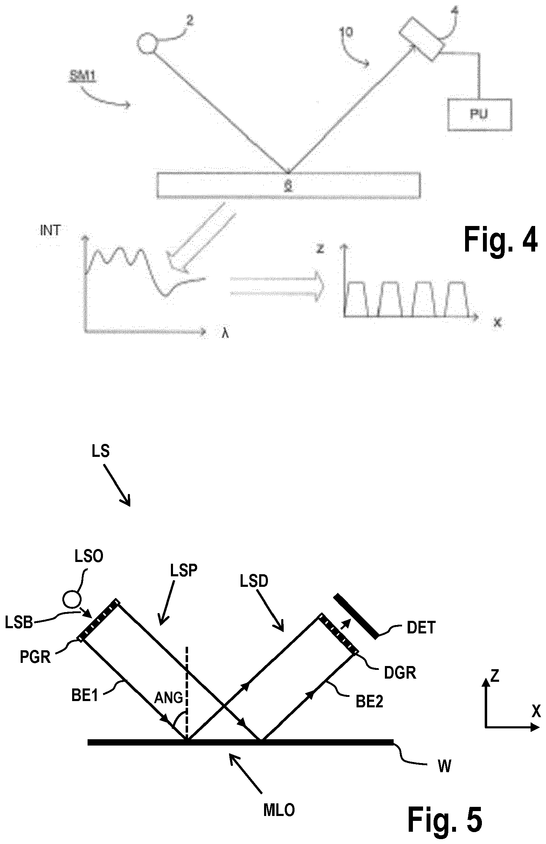

A metrology apparatus, such as a scatterometer SM1, is depicted in figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity INT as a function of wavelength λ) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 4. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

A topography measurement system, level sensor or height sensor, and which may be integrated in the lithographic apparatus, is arranged to measure a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband radiation source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

In the manufacture of complex devices, typically many lithographic patterning steps are performed, thereby forming functional features in successive layers on the substrate. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

A mark, or alignment mark, may comprise a series of bars formed on or in a layer provided on the substrate or formed (directly) in the substrate. The bars may be regularly spaced and act as grating lines so that the mark can be regarded as a diffraction grating with a well-known spatial period (pitch). Depending on the orientation of these grating lines, a mark may be designed to allow measurement of a position along the X axis, or along the Y axis (which is oriented substantially perpendicular to the X axis). A mark comprising bars that are arranged at +45 degrees and/or -45 degrees with respect to both the X- and Y-axes allows for a combined X- and Y- measurement using techniques as described in US2009/195768A, which is incorporated by reference.

The alignment sensor scans each mark optically with a spot of radiation to obtain a periodically varying signal, such as a sine wave. The phase of this signal is analyzed, to determine the position of the mark and, hence, of the substrate relative to the alignment sensor, which, in turn, is fixated relative to a reference frame of a lithographic apparatus. So-called coarse and fine marks may be provided, related to different (coarse and fine) mark dimensions, so that the alignment sensor can distinguish between different cycles of the periodic signal, as well as the exact position (phase) within a cycle. Marks of different pitches may also be used for this purpose.

Measuring the position of the marks may also provide information on a deformation of the substrate on which the marks are provided, for example in the form of a wafer grid. Deformation of the substrate may occur by, for example, electrostatic clamping of the substrate to the substrate table and/or heating of the substrate when the substrate is exposed to radiation.

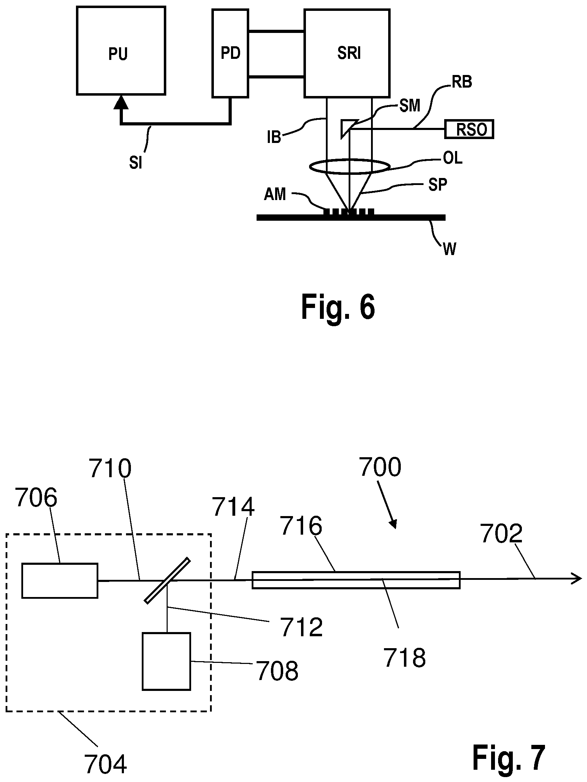

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as the scatterometers, level sensors, and alignment sensors described above, may use radiation to perform measurements. The radiation may be electromagnetic radiation. The radiation may be optical radiation, for example comprising wavelengths in the infrared, visible, and/or ultraviolet parts of the electromagnetic spectrum (e.g. in a range from 300 nm - 2000 nm). The radiation may comprise wavelengths in the deep ultraviolet (e.g. in a range from 200 nm - 300 nm)) and/or in the vacuum ultraviolet (e.g. in a range from 100 nm - 200 nm). The radiation may comprise wavelengths in the extreme ultraviolet EUV (e.g. 1 nm to 10 nm, or 1 nm to 100 nm), and or soft X-ray SXR (e.g. 0.1 nm to 10 nm) portions of the electromagnetic spectrum. The radiation used by metrology tools MT may be broadband radiation. The metrology tools MT may comprise or be connected to a radiation source. The type and quality of measurements performed by a metrology tool MT may be affected by the properties of the radiation used. Different types of radiation may be provided by different types of sources. Some sources may provide radiation at a single wavelength or in a small/narrow wavelength range. Other sources may be suitable for providing broadband radiation, for example sources covering fully or partially a wavelength range from 200 nm - 2000 nm.

Broadband radiation may be radiation that spans across a wavelength range significantly larger than narrowband or single wavelength radiation. Broadband radiation comprises a continuous, or substantially continuous range of wavelengths. A range of wavelengths may also referred to as a spectrum/spectral range. The continuous range of wavelengths may be over a range of at least 10 nm, 20 nm, 50nm, 100 nm, or 200nm, or more. The broadband radiation may have gaps in the wavelength range. These gaps may separate one or more continuous sub ranges within the wavelength range. A substantially continuous range may have discrete wavelength(s) and/or narrow wavelength band(s) missing from the range, and still be considered continuous. The power spectral density may be non-continuous, the power may vary across the broadband wavelength range.

The effects and techniques used for generating and providing radiation may be different for different types of radiation. For example, sources providing broadband radiation may use spectral broadening of input radiation having a different power spectral density profile than the desired source output radiation. The input radiation intended for spectral broadening may also be referred to as pump radiation. In some known examples, the input radiation may be single wavelength or narrowband wavelength radiation, for example coming from a laser source. This laser source may be a commercially available source. The laser may be a pulsed laser, or a continuous wave laser.

Broadband radiation may be generated using nonlinear processes. Nonlinear processes may require high radiation intensities to be initiated efficiently. This may for example be achieved by coupling high intensity radiation into an optical fibre. Inside the fibre core, the radiation may be confined inside a small volume/cross-section. As a result, strong localised intensities of radiation may be obtained. The optical fibre may be a photonic crystal fibre, which may achieve strong confinement of radiation, for example within the fibre core. This may contribute to providing localised high intensities of radiation.. In some instances, at least 80% of radiation coupled into the optical fibre may be confined inside the hollow core. In some instances, at least 85% of the radiation coupled into the optical fibre may be confined into the hollow core. In some instances, substantially all of the radiation coupled into the optical fibre may be confined inside the hollow core. Efficient coupling of radiation energy into a fibre may be achieved by using suitable matching optics.

A fibre may have an elongate dimension along which radiation is configured to propagate. A cross-section of a photonic crystal fibre perpendicular to this elongate dimension may comprise a distribution of microstructures surrounding the core. This distribution may form the photonic crystal structure for guiding and confining radiation. The radiation may be confined inside the fibre's core. The distribution in this cross-section may be substantially constant along the elongate dimension of the fibre. An example hollow core photonic crystal fibre may include a Kagome fibre, or a fibre comprising a single ring of capillaries (e.g. 6 capillaries) surrounding the hollow core.

Nonlinear processes may further require a nonlinear medium in which the nonlinear process may occur. This may for example be a nonlinear crystal, or a nonlinear fluid, for example a nonlinear gas or gas mixture. A nonlinear medium may be provided inside a fibre. The fibre may be a hollow-core fibre, for example a hollow-core photonic crystal fibre. The fibre may alternatively be a solid core fibre. A nonlinear medium, such as a nonlinear fluid, may be provided inside the hollow core. If the core is solid, the nonlinear medium may be the material from which the fibre is made, which may be glass. The glass may for example be pure silica (SiO₂), or doped SiO₂. In some instances, a gas (e.g. hydrogen gas H₂, or deuterium gas D₂) may be diffused inside the solid core. This may for example be achieved by placing the fibre in a high pressure gas chamber. High intensity radiation may then be strongly confined within the core of the optical fibre, allowing the high intensity radiation to interact with the nonlinear medium for generating broadband radiation.

Depending on the dispersion properties of a fibre and on the wavelength(s) provided in the fibre, different phenomena may contribute to the generation of broadband radiation. Examples of regimes in which broadband generation may operate include self-phase-modulation (SPM) and modulation instability (MI). Both SPM and MI may for example occur in supercontinuum generation in a fibre in which radiation is confined, such as a (hollow-core) photonic crystal fibre. Some spectral broadening processes, such as for example SPM, relate to the interaction of radiation with a nonlinear medium. Interaction of high intensity radiation with a nonlinear medium may cause the occurrence of nonlinear effects, for example broadening of a radiation pulse due to dispersion experienced because of the Kerr effect. It may lead to the spectral broadening of the radiation pulse. Other spectral broadening processes, for example modulation instability and four-wave mixing, may result from the effects of mixing two or more radiation wavelengths in a nonlinear medium. Broadening of a radiation wavelength range may result from deviations or modulations in a radiation pulse being reinforced through nonlinear Kerr effects. Modulation instability may lead to spectral broadening of the modulated radiation, contributing to generating broadband radiation. In both cases mentioned above, high intensity pump radiation are desirable to stimulate and achieve spectral broadening at an intensity sufficiently high to contribute to the output radiation of the source. In many cases, spectral broadening, and white light/broadband radiation generation may be the result of a combination of a plurality of nonlinear effects that may affect the pump radiation as it propagates along the fibre. The fibre may be a nonlinear fibre. A non-linear fibre may be any optical fibre that may show an optical non-linearity upon interacting with radiation. This may for example be a commercially available fibre, e.g. for use in the telecoms industry. Another example non-linear fibre may be a gas-filled hollow-core photonic crystal fibre. The fibre may be configured to have a laser pulse and/or continuous wave laser radiation propagation along its core.

Several challenges may arise in spectral broadening setups and processes. Modulation instability, which may lead to the generation of broadband radiation, is a stochastic process. It may rely on noise causing a modulation of the received radiation to allow modulation instability to occur. The amount of spectral broadening caused by modulation instability after a certain amount of time, for example after a certain propagation distance through a fibre, may therefore be difficult to predict. This may make the process less reliable, which may require an increase in interaction time/propagation length to increase the probability the intended amount of spectral broadening has occurred. This may make the system inefficient.

Another challenge in broadband generation may be caused by the use of high power pump pulses to intitate the spectral broadening. The high power pulses may lead to very high local intensities inside the source, which may lead to ionisation and heating related deformation of the surrounding materials. For example, input pump pulses may cause ionisation and/or heating related deformation inside a photonic crystal fibre. The ionisation may for example be of a gas medium inside the fibre. The ionisation may in turn lead to further heating of the area inside the fibre. The heating may result in damage to the fibre, reduction of efficiency of the fibre, and eventually failure of the fibre, the broadband generation setup, and therefore the source itself. This may result in a shorter lifetime of the source.

In order to avoid (over)heating and/or ionisation of the materials inside the source, it may be possible to reduce the repetition rate of the input pump laser. However, reducing the pulse rate may result in a lower signal-to-noise ratio. This may consequently lead to higher measurement noise for when the integration time of a measurement sensor (e.g. alignment sensor) remains the same as for the higher pulse rate. For some applications, a reduced pulse rate may therefore lead to a lower overall throughput of the measurement sensor, due to the need of a longer signal integration time (to reduce the signal-to-noise ratio). Reducing the pulse rate while keeping the power in a single pulse the same, also means the average input power, and as a result also the average output power, are reduced. Therefore, this solution may not always be preferable, and alternative solutions to reduce heating related damage may be desirable.

As described above, modulation instability is a stochastic process, seeded from quantum noise. Even when the conditions for MI are met, it may take a while for the spectral broadening process to start. When performed inside a fibre, this may mean that the pump radiation may propagate along a section of fibre until the MI-broadened spectrum is developed. The length of the fibre required for the development of the MI-broadened spectrum may be shortened by increasing the pump intensity and/or the pump pulse energy. However, such increase in intensity and/or energy may lead to the problems described in the paragraph above (e.g. overheating, ionisation). In an alternative setup, the pump radiation intensity may be reduced (e.g. by reducing the pulse energy and/or increasing its duration). Doing this may require the MI spectrum to be developed over a longer fibre length. This additional length added to the fibre may lead to higher losses inside the fibre, due to the longer distance the radiation propagates along the fibre. Considering these issues, it may be favourable to reduce the required input pulse intensity and/or energy, and/or reduce the fibre length, in order to obtain a fully developed MI spectrum.

A further challenge related to modulation instability is that it does not lead to an equal power distribution across the spectrally broadened radiation range. Some wavelengths may have more power converted into them, whilst other wavelengths may remain at significantly lower intensities, comparably. Furthermore, not all input radiation energy is converted to other wavelengths via spectral broadening, meaning that an intensity peak may remain in the output radiation, at the wavelength(s) of the high intensity input pulse(s). This may for example be the case if the length of fibre is not long enough, so that the output end of the fibre is reached before all input radiation is converted. Such a choice of shorter fibre length may still be advantageous as it may lead to lower losses or for miniaturization of the radiation source.

Described herein are assemblies, apparatuses, and methods for broadening received radiation by seeding a modulation instability process. The assemblies and methods described may address one or more of the challenges set out above.

Figure 7 depicts a radiation source assembly 700 for generating output broadband radiation 702 by spectral broadening. The radiation source assembly comprises a pump assembly 704 configured to provide broadband radiation. The pump assembly comprises a pump source 706 configured to provide pump radiation 710 at a pump wavelength. The pump radiation may also be referred to as first radiation. The pump wavelength may be referred to as a first wavelength. The pump assembly further comprises a broadband assembly 708 configured to provide (input) broadband radiation 712 comprising at least a continuous wavelength range. The broadband radiation may also be referred to as a second radiation. The pump radiation and input broadband radiation are combined to form broadband input radiation 714.

The radiation source assembly 700 further comprises an optical fibre 716 configured to receive the broadband input radiation 714. The optical fibre 716 comprises a core 718 configured to receive broadband radiation 714. At least a portion of the fibre is configured to confine the radiation so as to achieve spectral broadening of the input radiation during propagation through the fibre 716. The spectrally broadened radiation exits the fibre 716 from an output end, and is provided as output broadband radiation 702 by the radiation source assembly 700. The assembly 700 may comprise elements for coupling pump radiation into the fibre 716. The assembly 700 may comprise elements for coupling broadband radiation 702 out of the fibre 716.

An advantage of having the assembly for generating broadband output radiation using pump radiation seeded with broadband input radiation may be that a much flatter broadband output spectrum may be achieved. This may be a broadband spectrum with a power spectral density flatness that is better than 10 dB, such as for example 5 dB. Flat in this instance means the intensity distribution of the output radiation across the broadband spectrum having a smaller range of values (e.g. compared to a setup not providing broadband input radiation). This flat output intensity spectrum may be desirable for the radiation source.

Another advantage of the assembly 700 of figure 7 is that the stochastic process of modulation instability is initiated significantly earlier as a result of the presence of the broadband input radiation. This may be because the broadband radiation provided as input to the fibre may act as a seed for the modulation instability process. The presence of even small amounts of radiation at a wavelength can trigger the modulation instability induced spectral broadening. Having a lot of different seed wavelengths present means that instead of relying on the stochastic introduction of noise to the input radiation to start modulation instability, the wide range of wavelengths present in the input radiation may increase the likelihood and consistency of the start of the modulation instability process. By having broadband radiation present at the input, generation of a wide array of wavelengths can be started significantly earlier compared to a setup in which this radiation is not present. The broadband input radiation can be seen as a seed for the modulation instability process.

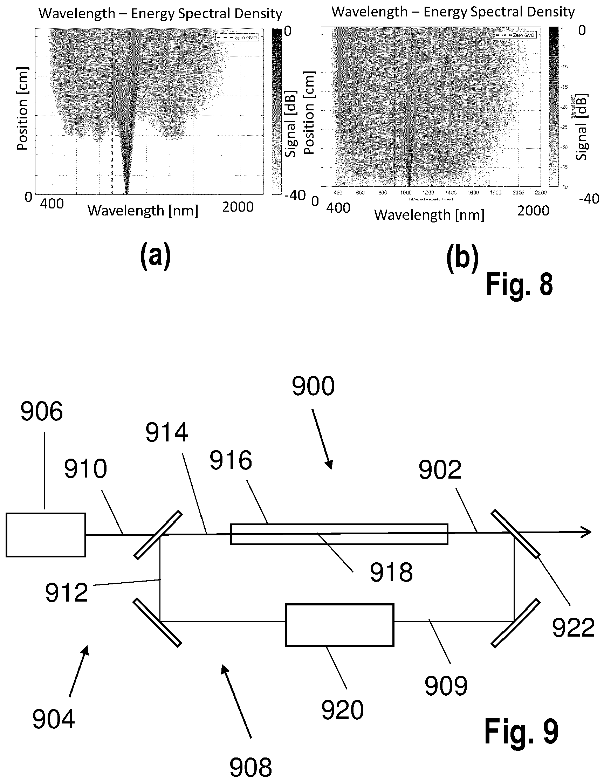

Advantages of having the spectral broadening process start earlier may include the ability to use a shorter fibre, compared to a setup where no broadband input radiation is provided. Figure 8 depicts example graphs representing energy spectral density as a function of wavelength and propagation length along a fibre. In Figure 8(a), a setup without input broadband radiation is shown for illustration and comparison purposes. The horizontal axis represents the wavelength spectrum. The vertical axis represents the position along a length of the fibre core. At the input, energy is present only at a narrow set of wavelengths. This may be the input pump radiation wavelength(s). The input radiation may propagate along the fibre length. The input radiation may first go through an initial self-phase modulation broadening. With only the pump radiation as input, it takes a while before the stochastic MI spectral broadening process starts. As illustrated in figure 8(a), the pump radiation may propagate for example along a distance in a range from 10 - 15 cm before starting the broadening process.

Once the MI spectral broadening starts, it may start at wavelengths that are linked to the pump wavelength according to gain and phase matching conditions for the four wave mixing (FWM) process. These wavelengths may appear initially, and may in turn cause further broadening, and may cascade to other wavelength regions. This may then generate a broadband wavelength spectrum. The spread of energy/power across the broadband wavelength range may be described in the form of energy spectral density, which describes the energy present in radiation as a function of wavelength (or frequency). At the output end of the fibre, it is possible that not all the excess input pump radiation energy has been converted into other wavelengths. Therefore, it is possible that there is an energy peak around the pump wavelength in the energy spectral density graph at the output of the fibre.

Figure 8(b) depicts the energy spectral density along the same type of fibre as in figure 8(a), but where the input radiation comprises both pump radiation and broadband radiation. Having a continuous range of wavelengths present to "seed" the MI spectral broadening process means that instead of relying on the stochastic introduction of noise to the input radiation to start modulation instability, the wide range of wavelengths present in the input radiation may increase the likelihood and consistency of the start of the modulation instability process. This may increase the stability and/or predictability of the broadband generation process. Compared to an implementation not using broadband input pump radiation, the assemblies and methods described herein may reduce the interaction time/propagation length required for generating broadband radiation.

The power of the pump radiation may be significantly larger than the power of the input broadband radiation. This may be seen from the greyscale intensity profile at the input end of the fibre. The spectral broadening may be broadening of the pump radiation. This may be a transfer of energy from the pump wavelengths to other wavelengths in the broadband range. Because of the presence of broadband radiation, even at potentially low pump energies, the modulation instability process may be triggered after a shorter propagation distance along the fibre (compared to the setup in figure 8(a)).

Because the broadband input radiation provides a continuous range of wavelengths, the FWM process is initiated for many of these wavelengths. This means that generation of a wide range of wavelengths may begin at or near the input end of the fibre. This may be in contrast to the initial FWM from figure 8(a), where the broadening process is started from a single set of FWM wavelengths. As a result, the energy spectral density of the source assembly having both pump radiation and broadband radiation as input may be more evenly distributed across the wavelengths in the range. This may be seen in figure 8, where the greyscale distribution across figure (b) is more constant than the greyscale distribution of figure (a).

The range of broadband radiation generated by an assembly having broadband input radiation as described herein may be larger than for a setup not having broadband input radiation, such as an input comprising only pump radiation, or pump radiation with a combination of one or more discrete seed wavelengths. A setup using only pump radiation, or pump radiation with one or more discrete/narrow wavelengths of seed radiation may result in a less flat/less continuous energy density spectrum.

It is important to note that the broadband input radiation 714 only has low energy amounts across the broadband radiation range compared to the energy across the range of output broadband radiation 702. The majority of the energy spectral density of the broadband output radiation results from the spectral broadening of pump radiation that occurs inside the fibre. The broadband radiation 712 may be provided for triggering the spectral broadening, and is not intended to make a significant contribution to the total broadband output energy.

In some assemblies, it is possible for only a portion of the fibre to have the core configuration to confine the radiation achieving highly localised intensities for triggering spectral broadening. This means that a fibre could be provided in which the internal structure of the fibre core and/or area surrounding the core changes along the length of the fibre. By length of the fibre, the path along which the radiation propagates along the fibre during normal operation is meant.

The pump radiation may be provided in the infrared or visible part of the spectrum. The pump radiation may have a narrow wavelength range, which may be a single wavelength. The pump radiation wavelength may be set so that it can be provided by a commercially available source. Examples of wavelengths provided by readily available sources include wavelengths of 1550 nm, 1030 nm, and wavelengths in the range of 700 - 800 nm. The pump radiation may be pulsed radiation, The pump radiation may have a pulse repetition rate around 5 MHz. The pulse repetition rate may be in a range from 1 - 20 MHz, for example 2.5 MHz, 5 MHz, 8 MHz, 10 MHz, or 15 MHz.

The broadband radiation may be provided for example by a radiation source, which may form part of the radiation source assembly, or may be connected to it. In some implementations, the broadband radiation may consist of a portion of the output radiation from the broadband output radiation formed by the source assembly. A feedback loop may be included in the source assembly to separate a portion of the broadband output radiation and send it back to the input.

Figure 9 depicts a radiation source assembly 900 for generating broadband output radiation 902. The pump assembly 904 may comprise a pump source 906 configured to provide pump radiation 910. The broadband assembly 908 may comprise an optical feedback loop 909 configured to feed back a portion of the output radiation 902 to contribute to broadband input radiation 912. The feedback portion may form the entire broadband input radiation, or it may be added be combined with other radiation to form the broadband radiation to be added to be coupled into the fibre 916. The broadband radiation 912 and pump radiation may be combined to form the broadband input radiation 914. The broadband input radiation may be coupled into to core 918 of optical fibre 916 for spectral broadening. The feedback optics may comprise for example a dichroic mirror. In case the polarization of the seed is orthogonal to the polarization of the input, a polarizing beam splitter may be provided in the feedback loop.

The optical feedback loop 909 may comprise a filter 920 or filtering the feedback portion of the radiation. The filter may for example filter polarisation(s) of the radiation. The polarisation to be fed back to the input may for example be selected to overlap with a polarisation of the input radiation. The polarisation of the seed radiation may overlap partially or fully with the polarisation of the pump radiation. The conversion of pump radiation to broadband radiation may be optimal when the polarisations of the (fed back) seed radiation and the pump radiation are aligned. However, the polarisation of the seed may be manipulated relative to the polarisation of the pump in order to control the shape (i.e. its amplitude) of the broadened spectrum.

The feedback loop 909 may comprise one or more optical elements 922 to separate a portion of the output radiation 902 away from the path of the bulk of the output radiation. The one or more optical elements 922 may for example comprise a beamsplitter. The optical element(s) may select radiation across the entire output wavelength range into the feedback loop 909. In some example implementations, the optical element(s) may select a subrange of the broadband output radiation range to be sent into the feedback loop. The subrange may for example comprise substantially only radiation with wavelengths > 1000 nm, < 1000 nm, in the visible part of the spectrum, etc.

In implementations where the input radiation and the output broadband radiation are pulsed radiation, the optical feedback loop is configured such that the fed back broadband radiation pulses spatially and temporally overlap with the pump radiation pulse, to form broadband input radiation. To achieve this, the feedback loop may comprise a delay line. In an example implementation the pulse repetition rate of the pump radiation may be 5MHz. In such a setup, a delay line with a length of the order of approximately 40 m may be provided. The feedback portion of the radiation may have an energy spectral density above the background noise, e.g. of one photon per frequency bin. The upper limit of the feedback portion may be solely defined by the architecture of the radiation source.

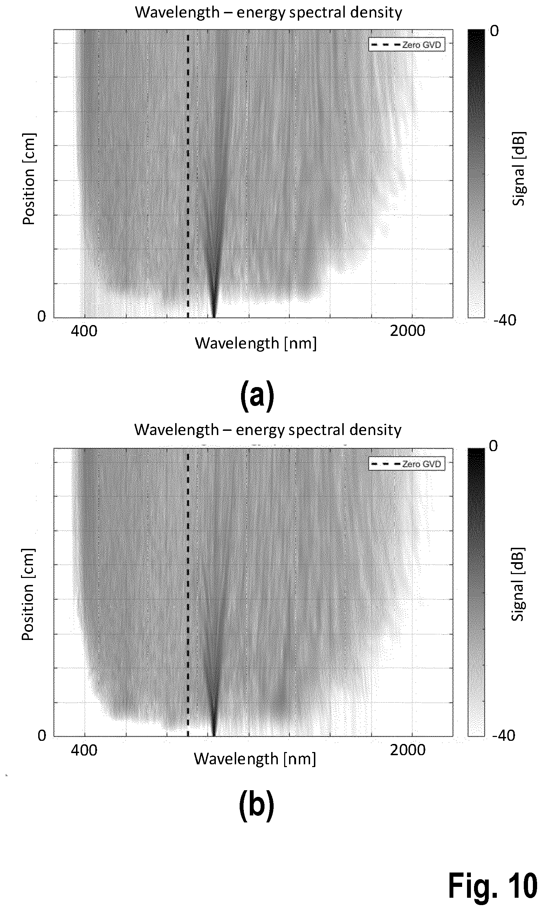

The process of using broadband input to encourage the MI spectral broadening may be insensitive to the exact range of broadband input wavelengths. Figure 10 depicts two example graphs with different broadband input radiation ranges. In Figure 10(a), radiation with a wavelength below 1000 nm is provided as broadband input radiation. In figure 10(b), radiation with wavelengths above 1000 nm are provided as broadband input radiation. Compared to the setup in figure 8(b), the input radiation may need a slightly longer propagation distance before the MI spectral broadening process starts. However, the overall broadening result may still be result in an evenly distributed energy spectral density and efficient conversion of the pump radiation. This may mean that the process described herein is relatively insensitive to the exact range of broadband input radiation. The advantage may be caused by the presence of a large amount of different (continuous) wavelengths at the input.

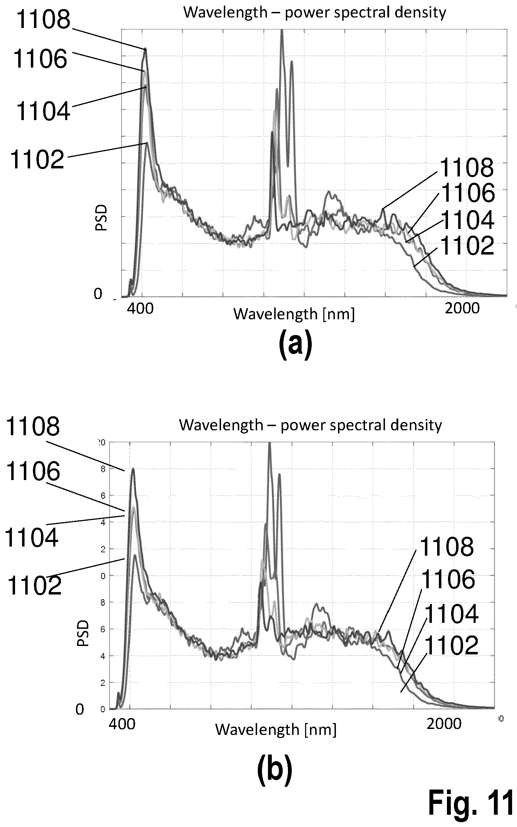

Figure 11 depicts graphs showing power spectral density values of broadband output radiation of broadband radiation assemblies for different percentages of feedback intensity. The graphs correspond to no feedback radiation (graph 1102), 0.05% feedback (graph 1104), 0.5% feedback (graph 1106), and 5% feedback (graph 1108). As may be seen from the graph 1102, the case with no feedback, i.e. the case where the assembly receives no broadband input radiation, the power spectral density curve is less flat compared to the graphs 1104, 1106, and 1108 having broadband feedback (and broadband input radiation). The power spectral density graphs for broadband input radiation may indicate a reduction of intensity around the wavelength of the pump wavelength (around 1100 nm wavelength). This may be because the increased spectral broadening setup may convert a larger proportion of pump radiation into the broadband spectrum, i.e. increasing the conversion efficiency from the pump radiation. The power spectral density graphs for broadband input radiation may indicate an increased intensity generated at the shorter wavelength end of the broadband spectrum. This may for example lead to a higher peak in intensity around the 400 - 600 nm range of the broadband spectrum. This may be desirable for example in applications in which the shorter wavelength radiation is of interest (e.g. because shorter wavelengths may be used for measuring smaller sized features).

An increased intensity of broadband feedback (comparing the 5% 1108, 0.5% 1106, and 0.05% 1104 graphs) may lead to a greater decrease in intensity around the pump radiation wavelength. An increased intensity of broadband feedback (comparing the 5% 1108, 0.5% 1106, and 0.05% 1104 graphs) may also lead to a higher peak of intensity around the shorter wavelength end of the broadband spectrum. However, it may be seen that even at lower feedback intensities (e.g. curve 1104), the effects of the broadband input radiation on the output broadband radiation power spectral density are significant and beneficial.

Figure 11(a) depicts power spectral density graphs for unfiltered feedback comprising wavelengths from the entire broadband output spectrum. Figure 11(b) depicts a power spectral density graph for filtered feedback comprising wavelengths from the visible portion of the broadband output spectrum. The differences between the power spectral density graphs of the unfiltered and filtered feedback assemblies are small. This may indicate a relatively low sensitivity to the exact wavelength range of the broadband input radiation.

This insensitivity to exact wavelength range may be beneficial for example in a setup where only a portion of the output radiation range is of interest to the application the radiation source assembly is being used for. In such a case, (a portion of) the radiation that is not being used for the application may be fed back to the input. The radiation of interest may be fed to the output to be used by the application, without being depleted by a portion being fed back. This may increase the overall efficiency of the source assembly. In an example setup, the radiation source assembly may generate broadband radiation in a range from 400 nm to 2200 nm. The application for which the radiation source assembly may be used may use for example radiation in the visible portion of the spectrum, or in the portion of the spectrum below 1000 nm. In such a setup, a feedback loop may use for example a beamsplitter configured to reflect/separate (a portion of) radiation in the infrared IR portion of the spectrum (e.g. radiation > 1000 nm, or >800 nm). The beamsplitter may allow radiation at lower wavelengths to pass through the beamsplitter towards the output of the source assembly. This is illustrated in figure 10(b). Although >1000 nm and <1000nm wavelength ranges are discussed here, other radiation selections may also be made.

The length of fibre needed to obtain the desired amount of spectral broadening may be at least partially determined by amount of interaction time/interaction length required by the input radiation to spectrally broaden and form broadband output radiation. Figures 8 and 10 depict graphs of generation radiation wavelengths as a function of propagation length along the fibre. By stimulating modulation instability by providing broadband input radiation, the required fibre length may be reduced.

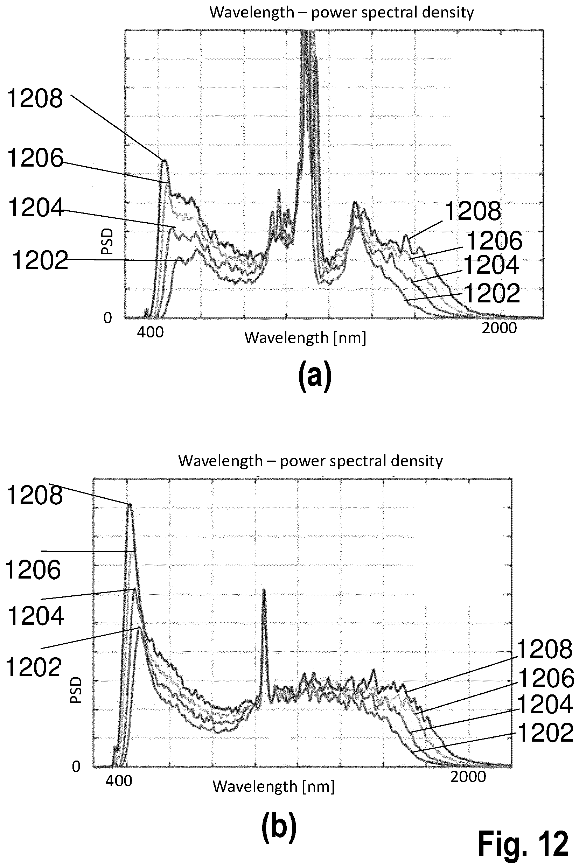

Figure 12 depicts graphs showing power spectral density values of broadband output radiation for different peak pulse intensities of the input radiation. The graphs correspond to pulse energies of 2.5 µJ (graph 1202), 3.0 µJ (graph 1204), 3.5 µJ (graph 1206), and 4.0 µJ (graph 1208). Figure 12(a) shows the graphs for an assembly that does not provide any feedback, and does not supply broadband input radiation for the spectral broadening process. As may be seen, the energy around the pump radiation (around 1100 nm wavelength) remains high for all peak pulse energy graphs. The energy peaks at the short wavelength end of the spectrum may also remain low for all peak energy graphs. Figure 12(b) shows power spectral density graphs for the same peak pulse energies, using a setup with 5% broadband radiation feedback provided to input radiation. As may be seen, the presence of the feedback for forming broadband input may lead to a significant reduction in energy around the pump radiation, as more pump radiation is spectrally broadened across the output spectrum. The energy peaks around the low wavelength end of the spectrum may also be increased.

In a setup that only provides narrowband/single wavelength input radiation, the length of the fibre may for example be more than 40 cm. In setups where broadband radiation is provided alongside pump radiation to form broadband input radiation (as described herein), a shorter length may be used in order to obtain a similar, equivalent, or otherwise acceptable amount of spectral broadening inside the fibre. This may be due to the MI process starting earlier along the length of the fibre as a result of the presence of broadband input radiation. The length for a fibre in a source assembly using broadband input radiation may be in a range from 5 cm to 40 cm, or 5 cm to 30 cm, or 5 cm to 20 cm, or 5 cm to 15 cm, or 5 cm to 10 cm. In some instances, any of the example ranges described before may have a lower limit of 10 cm. Longer fibre lengths may be provided for example in cases where the fibre length is not optimised to the shortest acceptable length. A longer fibre length may also be provided as it may be beneficial to further reduce the required pulse energy for triggering MI-based spectral broadening.

The majority of the energy in the input radiation to be spectrally broadened may be provided by the pump radiation. The pump radiation may be pulsed radiation. The pump pulses may have a peak energy in a range from 1 µJ - 10 µJ, or in a range from 2.5 µJ to 4.0 µJ. The second (broadband) radiation provided to seed the input radiation may have significantly lower energy than the pump radiation. The broadband radiation may have an intensity not exceeding 15%, or 10%, or 5%, or 2%, or 1% of the intensity of the pump radiation.

The core 718 of fibre 716 may comprise a fluid for enabling and/or causing spectral broadening when the radiation interacts with the fluid. The fluid may be a nonlinear medium. The fluid may be a gas. The gas may be a pure gas or a gas mixture. The mixture may comprise hydrogen (H₂). The gas mixture may comprise a noble gas (e.g. Ar, He, Kr, Xe, Ne). The gas may comprise a molecular gas (e.g. N₂). The fibre 716 may be positioned inside a resealable reservoir, which may be suitable for containing the fluid. The reservoir may for example have one or more gas supplies for providing and controlling the gas mixture inside the core 718 of the fibre 716.

The core 716 of fibre 718 may be a hollow core. Alternatively, the core may be a solid core. The fibre may be a photonic crystal fibre, for example a hollow core photonic crystal fibre (HC-PCF). The photonic crystal fibre may for example comprise a single ring of capillaries surrounding the hollow core. The capillaries may be spatially separate, so that the edges of neighbouring microstructures do not contact each other. The capillaries may be referred to as anti-resonant elements (RCEs). A single ring structure may be suitable for strongly confining the radiation inside the core of the fibre. This strong confinement may have the advantage of increasing local intensities of radiation and as a result increase the efficiency of the nonlinear spectral broadening process. Other photonic crystal fibre structures that achieve strong confinement of radiation inside the fibre core may also be used. The hollow core may have a diameter in a range from 20 µm to 50 µm, or in a range from 25 µm to 35 µm. The hollow core may have a diameter of for example 30 µm.

The broadband radiation generated by the source assembly may comprise supercontinuum radiation. The supercontinuum radiation may comprise a radiation over continuous range of wavelengths. The broadband radiation may comprise radiation in the range of 400 nm to 2200 nm. The supercontinuum radiation may comprise a continuous range of wavelengths at least in the range of 400 nm to 2200 nm.

The methods, apparatus, and assemblies for generating broadband radiation described herein may be implemented in a plurality of applications. They may for example be implemented in a radiation source described below.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localised high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber. (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

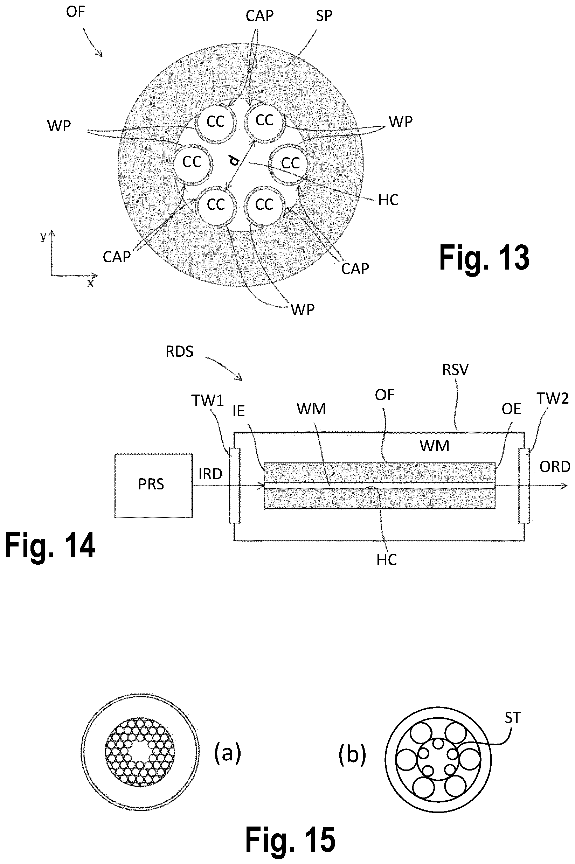

In some implementations, as discussed further below with reference to Figure 14, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of such a broadband radiation source comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 15(a) shows a Kagome fiber, comprising a Kagome lattice structure.

An example of an optical fiber for use in the radiation source is now described with reference to Figure 13, which is a schematic cross sectional view of the optical fiber OF in a transverse plane. Further embodiments similar to the practical example of the fiber of Figure 13 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 13 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 m, for example, the optical fiber OF may have a length between 10 cm and 100 cm.

The optical fiber OF comprises: a hollow core COR; a cladding portion surrounding the hollow core COR; and a support portion SP surrounding and supporting the cladding portion. The optical fiber OF may be considered to comprise a body (comprising the cladding portion and the support portion SP) having a hollow core COR. The cladding portion comprises a plurality of anti-resonance elements for guiding radiation through the hollow core COR. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally supressed. In some embodiments, the capillary wall portion WP may have a thickness between 0.01 - 10.0 µm.

It will be appreciated that, as used herein, the term cladding portion is intended to mean a portion of the optical fiber OF for guiding radiation propagating through the optical fiber OF (i.e. the capillaries CAP which confine said radiation within the hollow core COR). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core COR. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 µm. The diameter d of the hollow core HC may affect the mode field diameter, impact loss, dispersion, modal plurality, and non-linearity properties of the hollow core optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Furthermore, although the embodiment shown in Figure 13 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 15(b) shows a modified embodiment of the above discussed HC-PCFs with a single ring of tubular capillaries. In the example of Figure 15(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 13 and Figures 15 (a) and (b) may have a circular cross-sectional shape. Other shapes are also possible for the tubular capillaries, like elliptical or polygonal cross-sections. Additionally, the solid material of the tubular capillaries of the examples of Figure 13 and Figures 15 (a) and (b) may comprise plastic material, like PMA, glass, like silica, or soft glass.

Figure 14 depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 13) with a hollow core COR; and a working medium WM (for example a gas) disposed within the hollow core COR. Although in Figure 14 the radiation source RDS comprises the optical fiber OF shown in Figure 13, in alternative embodiments other types of hollow core optical fiber may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW 1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus 120.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 14 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton self-compression, soliton fission, Kerr effect, Raman effect and dispersive wave generation, details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core COR.

In order to achieve frequency broadening high intensity radiation may be desirable. An advantage of having a hollow core optical fiber OF is that it may achieve high intensity radiation through strong spatial confinement of radiation propagating through the optical fiber OF, achieving high localised radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core optical fiber OF may be that the majority of the radiation guided inside the optical fiber OF is confined to the hollow core COR. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The broadband range of the output radiation ORD may be a continuous range, comprising a continuous range of radiation frequencies. The output radiation ORD may comprise supercontinuum radiation. Continuous radiation may be beneficial for use in a number of applications, for example in metrology applications. For example, the continuous range of frequencies may be used to interrogate a large number of properties. The continuous range of frequencies may for example be used to determine and/or eliminate a frequency dependency of a measured property. Supercontinuum output radiation ORD may comprise for example electromagnetic radiation over a wavelength range of 100 nm - 4000 nm. The broadband output radiation ORD frequency range may be for example 400 nm - 900 nm, 500 nm - 900 nm, or 200 nm - 2000 nm. The supercontinuum output radiation ORD may comprise white light.

The input radiation IRD provided by the pulsed pump radiation source PRS may be pulsed. The input radiation IRD may comprise electromagnetic radiation of one or more frequencies between 200 nm and 2 µm. The input radiation IRD may for example comprise electromagnetic radiation with a wavelength of 1.03 µm. The repetition rate of the pulsed radiation IRD may be of an order of magnitude of 1 kHz to 100 MHz. The pulse energies may have an order of magnitude of 0.1 µJ to 100 µJ, for example 1 - 10 µJ. A pulse duration for the input radiation IRD may be between 10 fs and 10 ps, for example 300 fs. The average power of input radiation IRD may be between 100 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulse pump radiation source PRS parameters may include one or more of: pump wavelength, pump pulse energy, pump pulse width, pump pulse repetition rate. Said optical fiber OF parameters may include one or more of: optical fiber length, size and shape of the hollow core 101, size and shape of the capillaries, thickness of the walls of the capillaries surrounding the hollow core. Said working component WM, e.g. filling gas, parameters may include one or more of: gas type, gas pressure and gas temperature.

The broadband output radiation ORD provided by the radiation source RDS may have an average output power of at least 1 W. The average output power may be at least 5 W. The average output power may be at least 10 W. The broadband output radiation ORD may be pulsed broadband output radiation ORD. The broadband output radiation ORD may have a power spectral density in the entire wavelength band of the output radiation of at least 0.01 mW/nm. The power spectral density in the entire wavelength band of the broadband output radiation may be at least 3 mW/nm.

Further embodiments are disclosed in the subsequent numbered list of clauses:
1. A radiation source assembly for generating broadband radiation by spectral broadening, the radiation source assembly comprising:
   a pump assembly configured to provide broadband input radiation, the pump assembly comprising:
      a pump source configured to provide first radiation at a pump wavelength; and
      a broadband assembly configured to provide second radiation comprising a continuous wavelength range;
      wherein the first radiation and the second radiation form the broadband input radiation;
   an optical fibre configured to receive the broadband input radiation, and comprising a core configured along at least a part of the length of the fibre to guide the received broadband input radiation during propagation through the fibre, so as to generate broadband radiation by spectral broadening to be output by the fibre.
2. A radiation source assembly according to clause 1, wherein the broadband assembly comprises an optical feedback loop configured to feed back a portion of the output radiation of the source assembly to provide the second radiation.
3. A radiation source assembly according to any of the preceding clauses, wherein the broadband assembly comprises a polarization filter configured to set a polarization of the second radiation such that at least a portion of the polarization of the second radiation matches a polarization of the first radiation.
4. A radiation source assembly according to clause 2, wherein the optical feedback loop comprises a filter configured to select a subrange of the wavelength range of the broadband radiation output by the fibre.
5. A radiation source assembly according to clause 2, wherein the input radiation and the broadband radiation are pulsed radiation, and wherein the optical feedback loop is configured such that the portion of output radiation pulse spatially and temporally overlaps with at least a portion of the first radiation pulse inside the fibre core.
6. A radiation source assembly according to any of the preceding clauses, wherein the optical fibre is a hollow core fibre.
7. A radiation source assembly according to any of the preceding clauses, wherein the optical fibre is a photonic crystal fibre.
8. A radiation source assembly according to clause 7 when dependent clause 6, wherein the photonic crystal fibre comprises a single ring of microstructures surrounding the hollow core of the optical fibre.
9. A radiation source assembly according to clause 8, wherein the single ring structure comprises a plurality of capillaries surrounding the hollow core.
10. A radiation source assembly according to clause 6, wherein the hollow core has a diameter in a range from 20 µm to 50 µm, or has a diameter of 30 µm.
11. A radiation source assembly according to any of the preceding clauses, wherein the broadband radiation comprises supercontinuum radiation.
12. A radiation source assembly according to any of the preceding clauses, wherein the broadband radiation comprises radiation with wavelengths in a range from 400 nm - 2200 nm.
13. A radiation source assembly according to clause 6, wherein the core of the fibre is configured to comprise a nonlinear medium fluid for stimulating spectral broadening.
14. A radiation source assembly according to clause 13, further comprising a reservoir for containing the nonlinear medium fluid, the reservoir and the optical fibre being configured to provide the nonlinear medium fluid to the hollow core of the optical fibre.
15. A radiation source assembly according to any of clauses 13 to 14, wherein the fluid comprises a gas mixture comprising a noble gas.
16. A radiation source assembly according to any of clauses 13 to 15, wherein the fluid comprises a gas mixture comprising a molecular gas.
17. A radiation source assembly according to any of the preceding clauses wherein the length of the fibre is in a range from 5 cm to 40 cm.
18. A radiation source assembly according to any of the preceding clauses, wherein the first radiation has a pulse energy in a range from 1 µJ - 10 µJ, or 2.5 µJ - 4.0 µJ.
19. A radiation source assembly according to any of the preceding clauses, wherein the second radiation has an intensity not exceeding 1%, 2%, 5%, 10% or 15% of the intensity of the first radiation radiation.
20. A method for generating broadband radiation by spectral broadening, the method comprising:
   providing, by a pump assembly, broadband input radiation, wherein providing broadband input radiation comprises:
      providing, by a pump source, first radiation at a pump wavelength; and
      providing, by a broadband assembly, second radiation comprising a continuous wavelength range;
      wherein the first radiation and the second radiation form the broadband input radiation;
   receiving, in an optical fibre, the broadband input radiation;
   generating broadband radiation by spectral broadening by guiding, in a core of the fibre along at least a part of the length of the fibre, the received broadband input radiation during propagation through the fibre; and
   providing the generated broadband radiation as output of the fibre.
21. A metrology tool for determining a characteristic of interest of a structure on a substrate comprising a radiation source assembly according to any of clauses 1 - 19.
22. An inspection tool for inspecting a structure on a substrate comprising a radiation source assembly according to any of clauses 1 - 19.
23. A lithographic apparatus comprising a radiation source assembly according to any of clauses 1 - 19.
24. A litho cell comprising an apparatus according to any of clauses 21, 22, 23.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

Although specific reference is made to "metrology apparatus / tool / system" or "inspection apparatus / tool / system", these terms may refer to the same or similar types of tools, apparatuses or systems. E.g. the inspection or metrology apparatus that comprises an embodiment of the invention may be used to determine characteristics of structures on a substrate or on a wafer. E.g. the inspection apparatus or metrology apparatus that comprises an embodiment of the invention may be used to detect defects of a substrate or defects of structures on a substrate or on a wafer. In such an embodiment, a characteristic of interest of the structure on the substrate may relate to defects in the structure, the absence of a specific part of the structure, or the presence of an unwanted structure on the substrate or on the wafer.

## Claims

1. A radiation source assembly for generating broadband radiation by spectral broadening, the radiation source assembly comprising:
a pump assembly configured to provide broadband input radiation, the pump assembly comprising:
a pump source configured to provide first radiation at a pump wavelength; and
a broadband assembly configured to provide second radiation comprising a continuous wavelength range;
wherein the first radiation and the second radiation form the broadband input radiation;
an optical fibre configured to receive the broadband input radiation, and comprising a core configured along at least a part of the length of the fibre to guide the received broadband input radiation during propagation through the fibre, so as to generate broadband radiation by spectral broadening to be output by the fibre.

2. A radiation source assembly according to claim 1, wherein the broadband assembly comprises an optical feedback loop configured to feed back a portion of the output radiation of the source assembly to provide the second radiation.

3. A radiation source assembly according to any of the preceding claims, wherein the broadband assembly comprises a polarization filter configured to set a polarization of the second radiation such that at least a portion of the polarization of the second radiation matches a polarization of the first radiation.

4. A radiation source assembly according to claim 2, wherein the optical feedback loop comprises a filter configured to select a subrange of the wavelength range of the broadband radiation output by the fibre.

5. A radiation source assembly according to claim 2, wherein the input radiation and the broadband radiation are pulsed radiation, and wherein the optical feedback loop is configured such that the portion of output radiation pulse spatially and temporally overlaps with at least a portion of the first radiation pulse inside the fibre core.

6. A radiation source assembly according to any of the preceding claims, wherein the optical fibre is a hollow core fibre.

7. A radiation source assembly according to any of the preceding claims, wherein the optical fibre is a photonic crystal fibre.

8. A radiation source assembly according to claim 7 when dependent on claim 6, wherein the photonic crystal fibre comprises a single ring of microstructures surrounding the hollow core of the optical fibre.

9. A radiation source assembly according to claim 8, wherein the single ring structure comprises a plurality of capillaries surrounding the hollow core.

10. A radiation source assembly according to claim 6, wherein the hollow core has a diameter in a range from 20 µm to 50 µm, or has a diameter of 30 µm.

11. A radiation source assembly according to any of the preceding claims, wherein the broadband radiation comprises supercontinuum radiation.

12. A radiation source assembly according to claim 6, wherein the core of the fibre is configured to comprise a nonlinear medium fluid for stimulating spectral broadening.

13. A radiation source assembly according to any of the preceding claims wherein at least one of the following:
- the length of the fibre is in a range from 5 cm to 40 cm,
- the first radiation has a pulse energy in a range from 1 µJ - 10 µJ, or 2.5 µJ - 4.0 µJ, the second, and
- radiation has an intensity not exceeding 1%, 2%, 5%, 10% or 15% of the intensity of the first radiation radiation.

14. A method for generating broadband radiation by spectral broadening, the method comprising:
providing, by a pump assembly, broadband input radiation, wherein providing broadband input radiation comprises:
providing, by a pump source, first radiation at a pump wavelength; and
providing, by a broadband assembly, second radiation comprising a continuous wavelength range;
wherein the first radiation and the second radiation form the broadband input radiation;
receiving, in an optical fibre, the broadband input radiation;
generating broadband radiation by spectral broadening by guiding, in a core of the fibre along at least a part of the length of the fibre, the received broadband input radiation during propagation through the fibre; and
providing the generated broadband radiation as output of the fibre.

15. A metrology tool for determining a characteristic of interest of a structure on a substrate comprising a radiation source assembly according to any of claims 1 - 13.
